# EUROPÄISCHE PATENTANMELDUNG

(11) **EP 0 846 829 A1**
(43) Veröffentlichungstag der Anmeldung: **10.06.1998**
(21) Anmeldenummer: 96119374.5
(22) Anmeldetag: 03.12.1996
(51) Int. Cl.: E05F 15/10, F16H 49/00

(54) **Torantrieb mit Differenz-Stirnradangetriebe**

(71) Anmelder: Berner, Kurt, 72108 Rottenburg (DE)
(72) Erfinder: Berner, Kurt, 72108 Rottenburg (DE)
(74) Vertreter: Alber, Norbert

(57) **Zusammenfassung**

Es ist die Aufgabe der Erfindung, einen Torantrieb zu schaffen, bei dem die elektrische Antriebseinheit einfach und kostengünstig herzustellen ist, einen Elektromotor relativ geringer Leistung benötigt, geringen Raumbedarf erfordert und dennoch selbsthemmend ist. Dieser Torantrieb kennzeichnet sich dadurch, daß das Getriebe ein Differenzgetriebe umfaßt, bei welchem sich eine Abwälzhülse (1) mit ihrem Umfang (3) mit mindestens einem Umfangsabschnitt am Gegenumfang (4) einer konzentrisch angeordneten Stützhülse (2) abwälzt, Umfang (3) und Gegenumfang (4) unterschiedlich lang sind, der Umfang (3) der Abwälzhülse (1) eine unrunde, insbesondere elliptische, Form einnehmen kann und in radialer Richtung so flexibel ist, daß die Winkellage der unrunden Kontur gleichmäßig mit Hilfe eines Antriebes (11) um die Achsrichtung (5) herumwandern kann, ohne das flexible Bauteil (1) bzw. (2) selbst rotieren zu lassen, und das unrunde Teil (1) oder (2) mit einer Abtriebsachse (8) in Wirkverbindung steht.

## Beschreibung

Die Erfindung betrifft einen motorischen, insbesondere automatischen, Torantrieb, welcher in aller Regel mittels einer elektrischen Antriebseinheit betrieben wird.

### Technischer Hintergrund

Unterschiedliche Torformen, also Kipptore, Schwenktore oder Rolltore, werden dabei - entweder aufgrund manueller Auslösung mittels eines Schalters oder aufgrund eines drahtlos empfangenen Signals von einem Sender oder auch automatisch aufgrund des Signals eines Bewegungsmelders etc. - geöffnet und geschlossen, indem das Tor über eine entsprechende Mechanik von einer elektrischen Antriebseinheit aus bewegt wird.

Bei Schwenktoren umfaßt die Mechanik dabei in der Regel eine unter dem Garagendach in Längsrichtung umlaufende Kette oder einen Zahnriemen, an der in einer bestimmten Position eine Zug-/Schubstange befestigt ist, welche mit ihrem anderen Ende an der Innenseite des Tores befestigt ist.

Die Kette bzw. der Zahnriemen läuft dabei in der Regel um zwei Ritzel um, von denen eines mittels eines Elektromotors und eines dazwischen angeordneten untersetzenden Getriebes angetrieben ist. Das Tor wird geöffnet bzw. geschlossen, indem die Kette um annähernde die Länge eines Trums in der Öffnungs- bzw. Schließrichtung angetrieben wird.

Dabei müssen eine Reihe von Nebenforderungen so gut wie möglich erfüllt werden:

In erster Linie muß die zwischen dem Elektromotor und dem zu bewegenden Tor bestehende mechanische Verbindung selbsthemmend sein, so daß also nur durch Antrieb des Elektromotors eine Bewegung des Tores möglich ist, also ohne zusätzliche Entkopplung das Tor von außen per Hand nicht zur Überwindung der Antriebsmechanik geöffnet werden kann.

Weiterhin soll der Elektromotor vorzugsweise mittels dem üblicherweise vorhandenen Wechselstrom betreibbar sein. Die daraus resultierenden relativ hohen Drehzahlen konventioneller Elektromotoren müssen dann entsprechend stark untersetzt werden, um eine wünschenswert langsame Torbewegung zu erzielen.

Weiterhin soll der Wirkungsgrad des gesamten Verbindungsstranges vom Elektromotor bis zum Tor einen möglichst hohen Wirkungsgrad besitzen, um den Einsatz möglichst kleiner und kostengünstiger Elektromotoren zu ermöglichen, wobei insbesondere der Anschlußwert der Elektromotoren wegen der am Installationsort in der Regel nur begrenzten Anschlußquerschnitte und Stromstärken eine große Rolle spielt. Der Wirkungsgrad wird dabei wesentlich von dem dem Elektromotor nachgeordneten, stark untersetzenden Getriebe bestimmt.

Zu guter letzt soll dieses untersetzende Getriebe auch relativ kostengünstig herzustellen sein, und dennoch nur einen geringen Raumbedarf erfordern, um die meist in einem geschlossenen Gehäuse untergebrachte Antriebseinheit möglichst kompakt ausbilden zu können.

Stark untersetzende Getriebe sind jedoch in der Regel entweder sehr groß, z. B. Stirnradgetriebe mit einem sehr großen und einem sehr kleinen Ritzel, oder relativ teuer in der Herstellung, z. B. Schnecken/Schneckenradgetriebe.

Stark untersetzende kleine Differenzgetriebe mit fluchtender Antriebs- und Abtriebsrichtung sind unter dem Namen "Harmonic drive" bekannt. Diese Getriebe bestehen aus einem feststehenden, kreisringförmigen Außenring ("circular spline"), in welchem sich ein in radialer Richtung verformbare Buchse aus Stahl, die Abwälzbuchse, mittels am Umfang befindlicher Verzahnungen abwälzt. Diese Abwälzbuchse wird durch einen elliptischen Kern, welcher rotiert und die flexible Abwälzbuchse verformt, mit Differenzgeschwindigkeit indirekt angetrieben. Der Nachteil besteht jedoch in der aufwendigen Bauart, indem zwischen der Abwälzbuchse und dem elliptischen Kern ein flexibles Kugellager vorhanden ist, was notwendig ist, da das Kernteil einen fast genauso großen Durchmesser besitzt wie die radial verformbare Abwälzhülse, was zwischen beiden eine relativ hohe Geschwindigkeit bei bestimmter Nenndrehzahl ergibt, und bei der die Anwendung einer Gleitlagerung nicht mehr vertretbar erscheint. Derartige Getriebe werden daher nur in hochwertigen Robotern, Weltraumeinsatz und Ähnlichem verwendet, da selbst bei einem nur faustgroßen Modell der Stückpreis bei über 1.000 DM liegen kann.

### Darstellung der Erfindung

### a) Technische Aufgabe

Es ist daher die Aufgabe gemäß der Erfindung, einen Torantrieb zu schaffen, bei dem die elektrische Antriebseinheit einfach und kostengünstig herzustellen ist, einen Elektromotor relativ geringer Leistung benötigt, geringen Raumbedarf erfordert und dennoch selbsthemmend ist.

Zusätzlich sollte die Antriebs- und Abtriebsrichtung des stark untersetzenden Getriebes fluchten, um aus Elektromotor und Getriebe bestehende Antriebseinheiten schaffen zu können, deren Abtriebsrichtung mit der Richtung der Motorachse übereinstimmen.

### b) Lösung der Aufgabe

Diese Aufgabe wird bei einem Torantrieb, welcher neben einem Elektromotor ein untersetzendes Getriebe aufweist, durch die kennzeichnenden Merkmale des Anspruches 1 gelöst. Vorteil hatte Ausführungsformen ergeben sich aus den Unteransprüchen.

Dadurch, daß es sich um ein Differenzgetriebe handelt, ist die erzielbare Untersetzung sehr groß. Durch das Abwälzen der Abwälzhülse und der Stützhülse auf ihren Umfangsflächen fluchten Antriebs- und Abtriebsrichtung.

Durch die Verwendung eines flexiblen Bauteiles ist der Aufbau des getriebes sehr einfach, es werden also nur wenige und wegen der Stirnverzahnung am Umfang kostengünstige Bauteile benötigt.

Wenn die beiden aufeinander abwälzenden Hülsen an wenigstens zwei über den Umfang gleichmäßig verteilten Stellen immer gleichzeitig aufeinander abwälzen, also bei Verwendung einer Verzahnung im Eingriff sind, lassen sich sehr hohe Drehmomente übertragen, und dies bei einem sehr hohen Wirkungsgrad.

Wenn dabei die nicht drehende, kreisringförmige Stützhülse das umgebende Bauteil ist, in deren Inneren die in Radioler Richtung flexible und verformbare Abwälzhülse angeordnet ist, kann durch wenige und einfache stirnseitige verschließende Teile das Getriebe nach außen hin im wesentlichen verschlossen werden, wobei die Abstützhülse zugleich eine Gehäusefunktion erfüllt.

Dennoch kann prinzipiell auch eine umgekehrte Lösung funktionieren, bei der im Inneren eine außen verzahnte, kreisringförmige und feststehende Stützhülse angeordnet ist, auf deren Außenumfang sich eine in radialer Richtung flexibel verformbare Abwälzhülse mit ihrem Innenumfang abwälzt. In diesem Fall weist dann die Abwälzhülse die größere Zähnezahl gegenüber der Stützhülse auf, was den Vorteil hat, daß die sich ergebende langsame Drehung des flexiblen Bauteils, in diesem Falle der äußeren Abwälzhülse, mit der Antriebsdrehung des Getriebes nicht nur hinsichtlich der Achsrichtung fluchtet, sondern auch gleichsinnig dreht. Vor allem für optische Funktionsprüfungen an Antriebseinheiten kann dies bei einem Torantrieb, welcher zu einem hohen Prozentsatz von technischen Laien bedient und u. U. auch der Versuch einer Reparatur unternommen wird, von Vorteil sein.

Im folgenden wird jedoch von dem Fall einer umgebenden Abstützhülse und im Inneren befindlichen, radial flexiblen Abwälzhülse zu den weiteren Vorteilen übergegangen:

Die Verformung der im wesentlichen stillstehenden, nur um den Differenzbetrag der Zähnezahlen zur Abstützhülse sich drehenden, Abwälzhülse, wird durch eine Vielzahl von über den Umfang verteilten Radialstangen bewirkt, die in einer sehr kostengünstigen Ausführungsform zusammen mit der Abwälzhülse einstückig vorzugsweise aus Kunststoff im Spritzgußverfahren hergestellt werden.

Um ein Ausknicken dieser Radialstangen zu vermeiden, empfiehlt es sich, zusätzlich die inneren freien Enden der Radialstangen mittels einer verformbaren, ringförmig umlaufenden Innenhülse miteinander zu verbinden.

Dieses gesamte, an ein Speichenrad erinnernde Bauteil wird dadurch unrund, daß ein Antriebszapfen mit unrunder Außenkontur in das Innere der Innenhülse eingeschoben wird, diese in die unrunde, vorzugsweise elliptische, Form bringt, wodurch wegen der Vermittlung der Radialstange nach außen auch die Abwälzhülse diese unrunde, insbesondere elliptische Kontur einnimmt.

Um dabei ein seitliches Ausknicken der Radialstangen zu vermeiden, können diese entweder durch in radialer Richtung führende Elemente zwischen sich in Umfangsrichtung abgestützt werden, oder durch eine Konturierung der Radialstangen - in Achsrichtung betrachtet - die bewirkt, daß sich in wenigstens einem radialen Bereich die Radialstangen gegenseitig voneinander abstützen. Wegen der unrunden Kontur der Gesamteinheit im eingebauten Zustand kann dies - bei entsprechend dicker Ausbildung der Radialstangen - jedoch am radial inneren Ende optimal nur im Bereich der kürzesten Querachse und im radial äußeren Endbereich der Radialstangen nur im Bereich der momentan radial längst in Querachse optimal gelingen. Da jedoch für ein seitliches Ausknicken eine bestimmte nicht abgestützte radiale Erstreckung notwendig ist, kann z. B. die Kombination beider Maßnahmen, gepaart mit einem gerundeten Übergang der Radialstangen in die Außen und innen angeformten Abwälzhülse bzw. Innenhülse die notwendige Lebensdauer eines solchen Kunststoffteiles erzielen helfen.

Eine Schwierigkeit besteht in der Wirkverbindung der radial verformbaren Abtriebshülse mit einer Abtriebswelle. Wird bei einer speichenradförmigen Ausbildung der gesamten Abwälzhülse die vom Durchmesser her kleine Innenhülse mit einer Abtriebswelle verbunden, so muß die Verbindung zwischen beiden Teilen in axialer Richtung eine gewisse Mindestlänge besitzen und zusätzlich in Form eines dünnwandigen Hohlrohres ausgebildet sein, was keine optimale Belastbarkeit ergibt. Deshalb ist vorzugsweise axial versetzt zur stillstehenden, kreisringförmigen Stützhülse eine ebenfalls innen verzahnte Abtriebshülse angeordnet, die etwa den gleichen Teilkreis wie die Stützhülse besitzt, jedoch eine andere Zähnezahl.

Die Abwälzhülse überdeckt dabei den axialen Spalt zwischen Stützhülse und Abtriebshülse, und steht mit beiden in Eingriff.

Wenn dabei die Abtriebshülse die gleiche Zähnezahl besitzt wie die Abwälzhülse, bewirkt dies eine Untersetzung entsprechend der Differenz der Zähnezahlen zwischen Abstützhülse und Abwälzhülse zur Zähnezahl der Stützhülse, ohne daß die Abtriebshülse eine weitere Untersetzungs- bzw. Übersetzungsstufe darstellt, was der häufigste Anwendungsfall ist.

Da die Abtriebshülse jedoch einen größeren Umfang entlang des Teilkreises besitzt als die im Inneren abwälzende in radialer Richtung verformbare Abwälzhülse, kann auf dem Teilkreis der Abtriebshülse die gleiche Zähnezahl wie auf der Abwälzhülse nur durch größeren Zahnabstand verteilt werden. Folglich tritt beim Abwälzen der Abwälzhülse in der Abtriebshülse verstärkte Gleitreibung beim Eintauchen der Verzahnungen in radialer Richtung auf.

Dies kann vermieden bzw. zur Verminderung der Flächenpressung auf eine wesentlich größere Gleitfläche verteilt werden, wenn auf eine Abtriebshülse, die in Zahneingriff mit der Abwälzhülse steht, vollständig verzichtet wird, indem statt dessen ein Käfig, der mit Führungselementen stirnseitig zwischen die Radialstangen der Abwälzhülse eingreift, direkt drehfest mit der Abtriebswelle verbunden ist. Dadurch steht für die Gleitreibung die gesamte radiale Erstreckung der Radialstangen gegenüber den Gleitelementen des Käfigs zur Verfügung, was die auftretenden Gleitreibungen deutlich herabsetzt.

Weiterhin ist bei Verwendung des Käfigs auch problemlos der Einsatz von separaten, nicht mit der Abwälzhülse oder einer zusätzlichen Innenhülse in Verbindung stehenden Radialstangen aus einen gegen seitliches Ausknicken stabilen Material, etwa einem weichen Metall, möglich. Um eine gute Führung in radialer Richtung zu bewirken, müssen solche separat eingesetzten mit einem Käfig geführten Radialstangen parallele Flanken aufweisen. Sie bieten jedoch den Vorteil, daß sie einfach herzustellen sind und mit ihren inneren und äußeren Enden direkt auf einerseits der Außenumfangskontur des Antriebszapfens und andererseits dem Innenumfang der Abwälzhülse gleiten können und dadurch eine für die Gleitreibung ideale Materialpaarung erzielbar ist.

Ein weiterer Vorteil besteht auch darin, daß dadurch die Abwälzhülse lediglich aus einem ringförmigen, einfach herzustellenden Teil besteht, wofür in diesem Fall etwa ein endlos geschlossener Ring eines Zahnriemens, etwa aus einem gummiähnlichen Material, verwendet werden kann.

Anstelle der Radialstangen, die über den gesamten Umfang verteilt vorhanden sein müssen, ist das Verformen und Anpressen der Abwälzhülse an die Stützhülse auch dadurch möglich, daß im Inneren der Abwälzhülse ein dem Innenumfang der Abwälzhülse entsprechender Querarm um die Achsrichtung rotiert, und dessen einander gegenüberliegende freie Enden entsprechend des großen Durchmessers einer Ellipse die Abwälzhülse nach außen gegen die Stützhülse drückt. Dieser Querarm ist drehfest mit dem Antrieb verbunden. An den freien Enden des Querarmes können zur Reduzierung der Reibung eine Anpreßrolle angeordnet sein, die dann auf dem Innenumfang der Abwälzhülse abrollt. Wegen des hohen Wirkungsgrades eines solchen Getriebes kann es mit einem relativ leistungsschwachen Elektromotor zu einer Antriebseinheit für einen Torantrieb kombiniert werden, indem das Getriebe koaxial auf die Abtriebswelle des Motors aufgebracht wird. Dabei kann der stirnseitige Lagerdeckel des Elektromotors gleichzeitig als feststehende, die Abwälzhülse außen umschließende Stützhülse mit einer entsprechenden Innenverzahnung ausgebildet werden, auf welche auf der vom Motor abgewandten Seite die mit der Abtriebswelle drehfest gekoppelte Abtriebshülse mit Innenverzahnung oder statt dessen der in die Zwischenräume zwischen die Radialstangen eingreifende Käfig axial aufgeschoben wird.

Eine solche koaxiale Bauform der Motorgetriebeeinheit verringert die axiale Baulänge des Elektromotors nur um 2-4 cm bei einem üblichen Torantrieb für ein 2 x 3 m großes Schwenktor oder Rolltor.

Ein weiterer Vorteil liegt darin, daß mit den gleichen Getriebebauteilen auch eine Anordnung des Untersetzungsgetriebes im 90°-Winkel zur Motorwelle für diejenigen Anwendungsfälle möglich ist, bei welchen eine gekröpfte Ausführung der Motorgetriebeeinheit aufgrund der Einbausituation notwendig ist, beispielsweise in der an der Garagendecke montierten Antriebseinheit für Schwenktore. Dabei ist die Eingangsseite des Differenzgetriebes lediglich mit einer Tellerradverzahnung ausgestattet, in welches das als Ritzel ausgebildete Ende der Motorwelle eingreift. Alle übrigen Bauteile, sogar der auf der Abtriebseite des Getriebes aufgesetzte stirnseitige Lagerdeckel, mittels welchem der Abtriebszapfen der motorgetriebenen Einheit in einem Nadellager gelagert werden kann, sind gleich.

Gleichzeitig sind keine zusätzlichen Maßnahmen zur Erzielung der Selbsthemmung des Torantriebes mehr notwendig.

### c) Ausführungsbeispiele

Eine Ausführungsform gemäß der Erfindung ist im folgenden anhand der Figuren beispielhaft näher beschrieben. Es zeigen:
- Fig. 1:: eine Stirnansicht des Untersetzungsgetriebes,
- Fig. 1a:: eine Detailansicht der Abwälzhülse im Ausgangszustand,
- Fig. 2:: eine Schnittdarstellung des Getriebes gemäß Fig. 1,
- Fig. 3:: die Schnittdarstellung eines abgewandelten Differenzgetriebes,
- Fig. 3a:: eine separate Darstellung eines Einzelteiles aus Fig. 3,
- Fig. 4:: eine Frontansicht einer weiteren Version des Untersetzungsgetriebes,
- Fig. 4a:: ein Einzelteil hieraus im Längsschnitt,
- Fig. 5:: Detaildarstellungen zur Abwälzhülse,
- Fig. 6:: eine Frontansicht einer weiteren Version des Getriebes,
- Fig. 7:: eine Frontansicht mit außen umlaufender Abwälzhülse,
- Fig. 8:: die Schnittdarstellung einer koaxialen Antriebseinheit, und
- Fig. 9:: eine Schnittdarstellung einer gewinkelten Antriebseinheit.

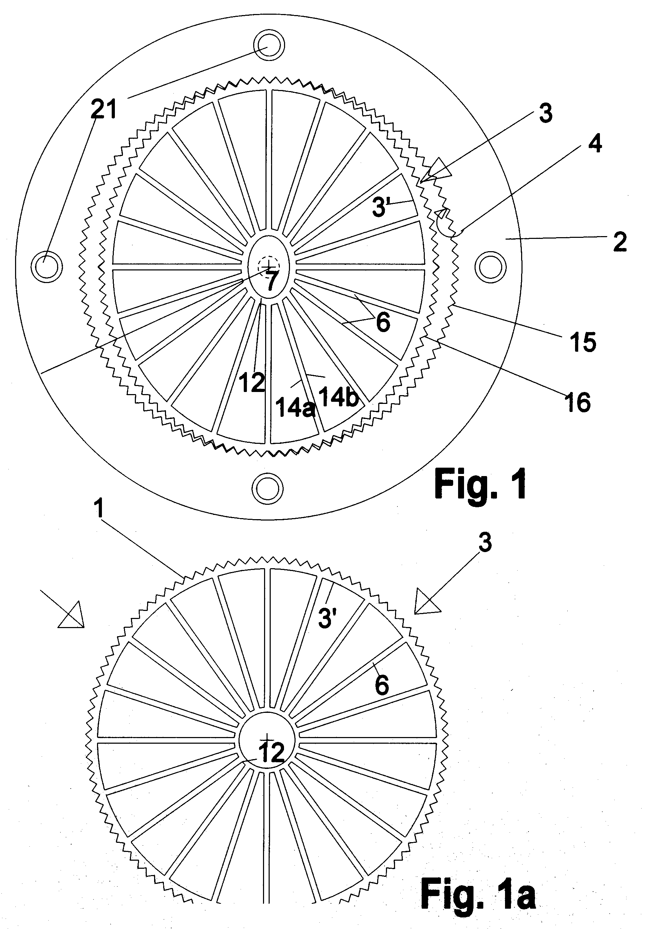

Fig. 1 zeigt in Frontansicht, also betrachtet in Achsrichtung 5 der fluchtenden An- und Abtriebsrichtung das Untersetzungsgetriebe des erfindungsgemäßen Torantriebes.

Dabei befindet sich außen die kreisringförmige Stützhülse 2, die an ihrem Innenumfang mit einer Innenverzahnung 15 ausgestattet ist. Die Stützhülse 2 ist fest, nicht drehbar, an einem umgebenden Bauteil mittels der symbolisch dargestellten Verschraubung 21 befestigt. Im inneren Freiraum der Stützhülse 2 befindet sich die Abwälzhülse 1, die in Fig. 1a separat im nicht montierten Zustand dargestellt ist. Im montierten Zustand der Fig. 1a ist die Abwälzhülse 1 elliptisch geformt und mit einer Außenverzahnung 16 an ihrem äußeren Umfang 3 ausgestattet, daß sie an den aneinander gegenüberliegenden Stellen ihres größeren Durchmessers mit der Innenverzahnung 15 am Gegenumfang 4 der Stützhülse 2 in Eingriff ist.

Die gewünschte starke Untersetzung kommt dadurch zustande, daß die Abwälzhülse 1 aufgrund ihrer kürzeren Umfangslänge weniger Zähne auf ihrer Außenverzahnung 16 aufweist als die Innenverzahnung 15 der Stützhülse 2.

Wenn nun die Abwälzhülse 1 umlaufend so verformt wird, daß die momentan größte Halbachse der Ellipse, welche die Abwälzhülse 1 darstellt, um die Achsrichtung 5 rotiert - wobei die Abwälzhülse 1 nicht mit dieser Geschwindigkeit rotiert, sondern im wesentlichen still steht - erfolgt als Überlagerungseffekt eine langsame Drehung der Abwälzhülse um die Zahndifferenz zwischen Abwälzhülse 1 und Stützhülse 2 pro Umlauf der großen Halbachse der elliptischen Abwälzhülse 1, und zwar in Gegenrichtung zu deren Drehsinn.

Die Erzeugung der Ellipsenform der Abwälzhülse 1 und die Rotation des großen Durchmessers dieser Abwälzhülse wird dadurch erzielt, daß wie in Fig. 1a besser ersichtlich - die Abwälzhülse 1, also der äußere Ring des in Fig. 1a dargestellten Speichenrades 31 ebenso aus einem in radialer Richtung flexiblen Material besteht wie die als Nabe dienende Innenhülse 12 des Speichenrades 31. Die zwischen Innenhülse 12 und Abwälzhülse 1 radial verlaufenden Radialstangen 6 sind dagegen in radialer Richtung möglichst steif ausgebildet.

Dennoch kann das gesamte Speichenrad 31 der Fig. 1a aus einem einheitlichen Material, beispielsweise Kunststoff, bestehen, wobei die Steifigkeit der Radialstangen 6 durch Dimensionierung und Formgebung optimiert werden kann, wie im folgenden noch dargelegt.

Wird nun - im montierten Zustand - in die Innenhülse 12 ein unrunder und im Fall der Fig. 1 elliptischer Antriebszapfen 7 eingesteckt, dessen Außenumfang möglichst spielfrei dem Innenumfang der Innenhülse 12 entspricht, so wird dadurch die Innenhülse 12 zu einer Ellipse verformt, und - durch radiale Weitergabe dieser Kontur über die Radialstange 6 nach außen - auch die Abwälzhülse 1 zu einer Ellipse verformt.

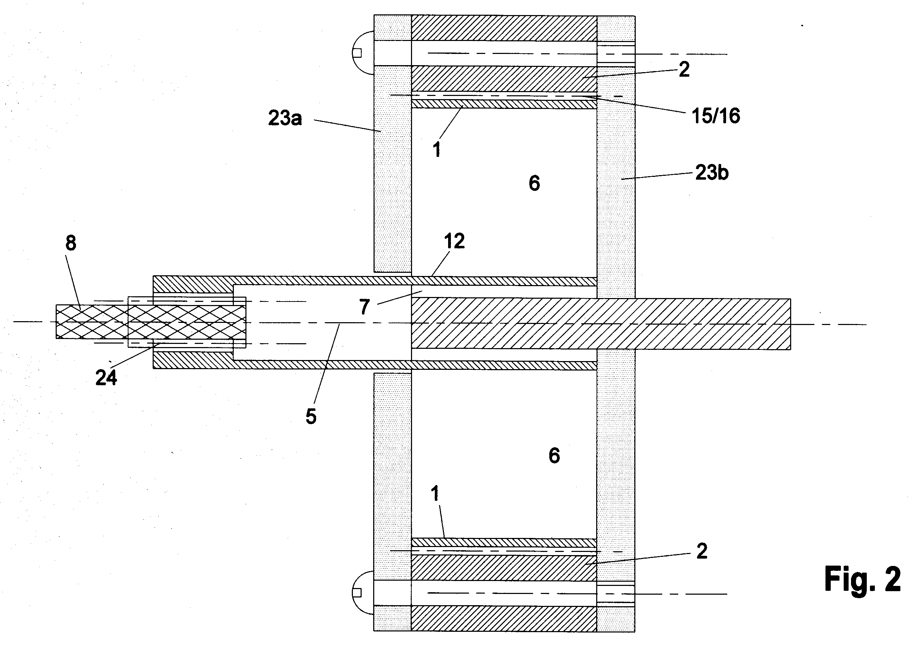

Indem zum Betrieb des Getriebes der Antriebszapfen 7 gleitend in der Innenhülse 12 des Speichenrades 31 rotiert, muß ein Umlauf des großen Durchmessers der Abwälzhülse 1 z. B. in Uhrzeigerrichtung bewirkt, und dadurch bedingt eine geringfügige Drehung der Abwälzhülse 1 um die Achsrichtung 5 entgegen der Uhrzeigerrichtung. Die Abwälzhülse 1 stellt damit die Abtriebsseite des Untersetzungsgetriebes dar. Wie besser anhand des Längsschnittes der Fig. 2 zu erkennen, ist beispielsweise die gesamte Verzahnung (Innenverzahnung 15 und Außenverzahnung 16) zwischen zwei stirnseitigen Deckeln 23a, 23b, die etwa fest mit der äußeren Stützhülse 2 verschraubt werden können, aufgenommen. Von der einen Stirnseite her durchdringt eine Welle eines Antriebes 11 die eine Stirnwand 23b, und auf diesem Antrieb 11 ist der unrunde, z. B. elliptische, Antriebszapfen 7 drehfest aufgebracht. Anstelle einer Ellipse mit zwei großen Halbmessern könnte natürlich auch eine Dreieckskontur mit drei großen Halbmessern Verwendung finden, wenn beispielsweise wegen hoher zu übertragender Drehmomente größere Eingriffsabschnitte an der Verzahnung gewünscht werden.

Der Abtrieb geschieht dadurch, daß die Innenhülse 12 des einstückig ausgebildeten Speichenrades 31, dessen Außenring die Abwälzhülse 1 darstellt, als lange Hohlwelle die andere Stirnseite durch den anderen Deckel 23a hindurch durchdringt, und dort, vorzugsweise wiederum mittels einer Verzahnung 24, mit einem eingesteckte Abtriebswelle drehfest verbunden ist.

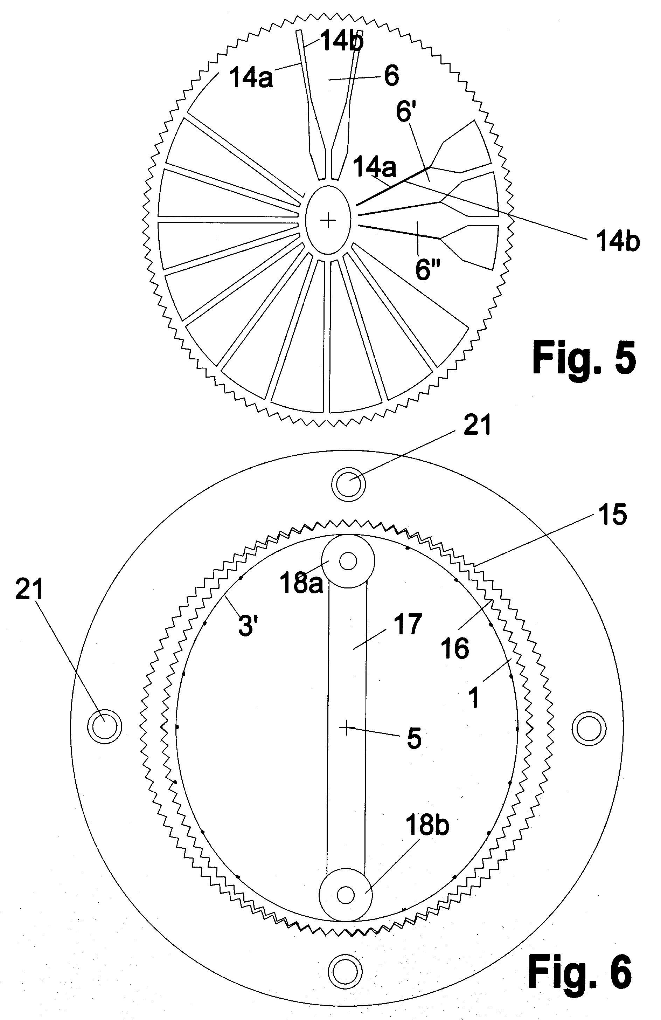

Um ein Ausknicken der Radialstangen 6 zur Seite, also in Umfangsrichtung, zu vermeiden, ohne den fertigungstechnischen Vorteil eines einstückig ausgebildeten Speichenrades 31 wie in Fig. 1a zu verlieren, können - in Achsrichtung betrachtet - die Radialstangen 6 anders geformt und dimensioniert sein, wie in Fig. 5 beispielhaft dargestellt. Die in der obersten Position dargestellte Radialstange 6' besitzt beispielsweise in ihrem radial äußeren Bereich eine solche Breite, daß sich in der Nähe und auf dem großen Durchmesser liegend zwei benachbarte solche Radialstangen 6' im radial außen liegenden Bereich mit ihren gegeneinandergerichteten Flanken 14a, 14b gegenseitig abstützen können, so daß zumindest in diesem Bereich ein Ausknicken der Radialstangen 6' vermieden werden kann. In dem radial weiter innen liegenden Bereich, in dem die Flanken 14a, 14b einen zunehmenden Abstand voneinander aufweisen, ist die verbleibende Länge in Längsrichtung der Radialstangen 6' zu gering, um ein Ausknicken zu bewirken.

Anders dagegen die im Bereich des kurzen Durchmessers der Ellipse dargestellten Radialstangen 6'': diese sind im radial innen liegenden Bereich, mindestens bis zur Hälfte ihrer Länge, keilförmig und nach außen breiter werden so dimensioniert, daß in diesem Bereich des kurzen Durchmessers im radial innen liegenden Bereich sich zwei benachbarte Radialstangen 6'' mit ihren gegeneinander gerichteten Flanken 14a, 14b annähernd spielfrei aneinander abstützen. Der Winkel zwischen den Flanken 14a und 14b einer Radialstange 6'' entspricht im radial innen liegenden Bereich also etwa 360° geteilt durch die Anzahl der Radialstangen 6''.

Auch eine Kombination der vorbeschriebenen Maßnahmen für die radial innen liegenden und radial ausliegenden Bereich der Radialstangen an ein und derselben Radialstange ist möglich. Es sind jeweils die Radialstangen über den gesamten Umfang des Speichenrades vorzugsweise gleich gestaltet.

Zwischen der Abwälzhülse 1 und der Stützhülse 2 kann anstelle der definiert formschlüssigen Verzahnung 15/16 auch ein undefinierter Formschluß verwendet werden, indem die aufeinander abwälzenden Umfänge von Wälzhülse und Stützhülse wenigstens einseitig mit undefinierten, möglichst kleinen und vielen, Erhebungen ausgestattet ist, z. B. indem eine Fläche aus einem relativ harten Material mit vielen kleinen Erhebungen besteht und die andere Fläche aus z. B. nachgiebigem Material wie Gummi oder Schaumstoff besteht. Auch ineinandergreifende Nadelflächen etc. sind möglich.

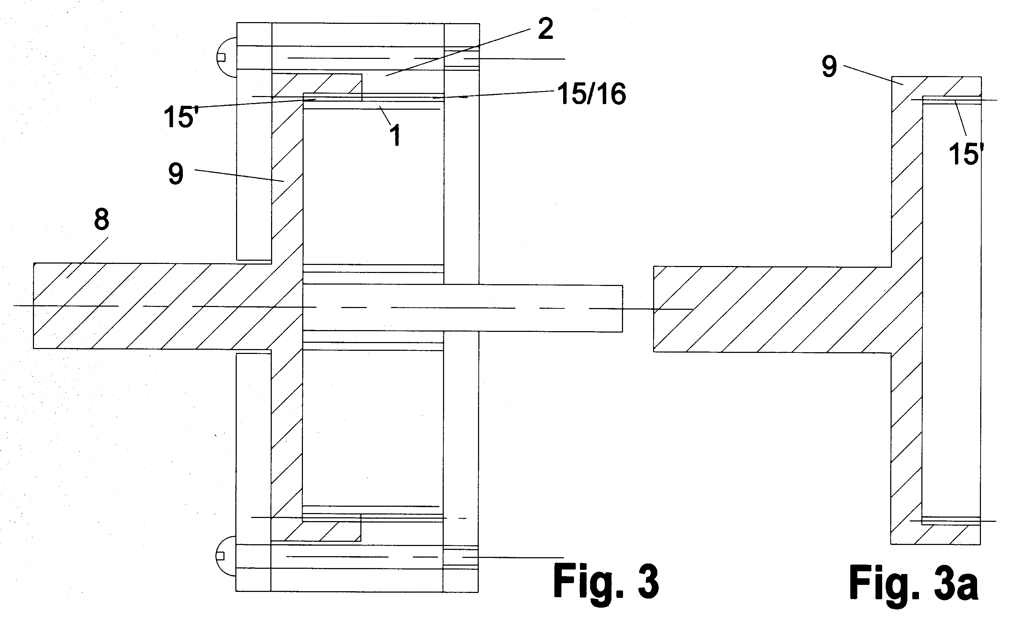

Um den in Fig. 2 dargestellten Nachteil des Abtriebs über die dünnwandige und damit wenig stabile zur Hohlwelle verlängerte Innenhülse 12 zu vermeiden, kann die in Fig. 3 eingesetzte Variante benutzt werden. Während gemäß Fig. 2 die Breite - also in Achsrichtung 5 gemessen - der Verzahnung 15 in etwa der der Verzahnung 16 entspricht, ist aus Fig. 3 ersichtlich, daß sich axial versetzt und mit etwa gleichem Teilkreisdurchmesser neben der Stützhülse 2 mit deren Innenverzahnung 15 eine Abtriebshülse 9 befindet, die ebenfalls eine Innenverzahnung 15' aufweist. Die Abwälzhülse 1 mit ihrer Außenverzahnung 16 greift in axialer Richtung - sitzt am Übergang zwischen der Stützhülse 2 und der Abtriebshülse 9, und ist mit beiden in Eingriff.

Im Gegensatz zur Stützhülse 2 ist die Abtriebshülse 9 jedoch um die Achsrichtung 5 herum drehbar, und unmittelbar, vorzugsweise einstückig, mit der Abtriebswelle 8 verbunden.

Die zwischen der Stützhülse 2 und der Abwälzhülse 1 bewirkte Untersetzung wird an die Abtriebshülse 9 ohne weitere Übersetzung, also 1:1, weitergegeben, wenn die Innenverzahnung 15' der Abtriebshülse 9 die gleiche Zähnezahl aufweist wie die Außenverzahnung 16 der Abwälzhülse 1. Differieren die beiden Zähnezahlen, bewirkt der Eingriff zwischen Abwälzhülse 1 und Abtriebshülse 9 eine weitere Über- bzw. Untersetzung. Wegen des größeren Teilkreisdurchmessers der Abtriebshülse 9 gegenüber der Abwälzhülse 1 wird jedoch bei dieser kaum eine kleinere, sondern eher eine größere Zähnezahl zu erzielen sein, was den Untersetzungseffekt der ersten Verzahnung 15/16 vermindern würde. Angestrebt wird daher im Regelfall eine gleiche Zähnezahl der Innenverzahnung 15' der Abtriebshülse 9 gegenüber der Außenverzahnung 16 der Abwälzhülse 1.

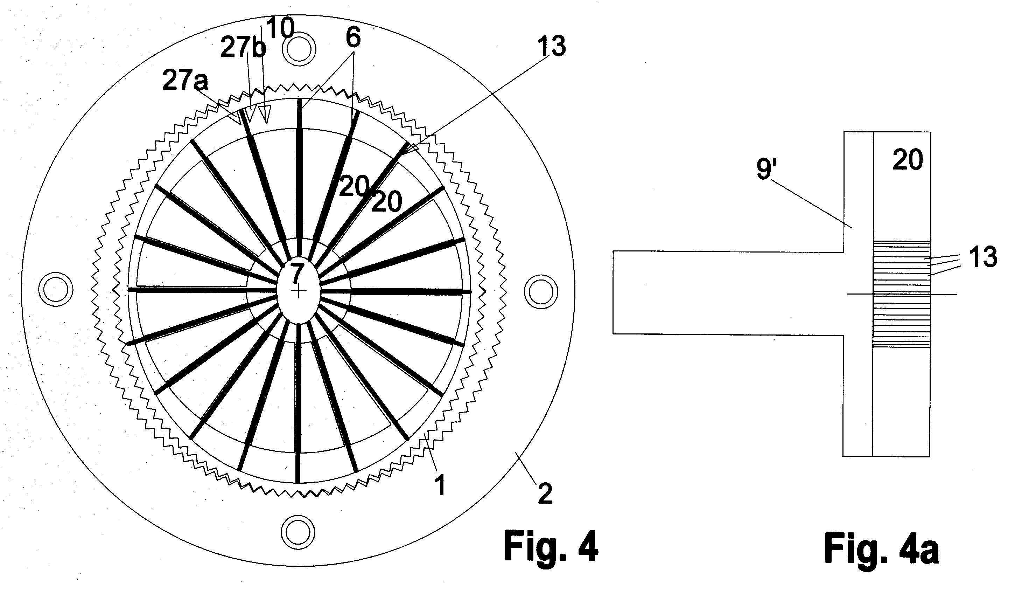

Gerade bei der Übertragung großer Drehmomente und zur Erzielung einer hohen Lebensdauer könnte die Stabilität der Radialstangen 6 bei der in Fig. 1-3 dargestellten Lösung ein begrenzender Faktor sein. Wenn dies der Fall ist, wird vorzugsweise nicht das einstückige Speichenrad 31 der Fig. 1a verwendet, sondern eine Abwälzhülse 1, die - wie in Fig. 4 dargestellt - lediglich aus einem außen verzahnten Ring besteht. Die Verformung dieser Abwälzhülse 1 erfolgt wiederum mittels Radialstangen 6, die jedoch separate Bauteile darstellen, und die Abwälzhülse 1 dadurch radial von innen nach außen - im Bereich der großen Querachse - beaufschlagen, indem sie sich mit ihren inneren Enden auf dem elliptischen Außenumfang des Antriebszapfens 7 oder einen aus Gründen der Materialpaarung darauf aufgesetzte Buchse, die vorzugsweise gleichbleibende Wanddicke über den Umfang besitzt, abstützen, und mit ihrem äußeren Ende am Innenumfang der Abwälzhülse 1. Zu diesem Zweck sind die radial inneren und äußeren Enden der Radialstangen 6 vorzugsweise gerundet ausgebildet. Durch die separate Ausbildung der Radialstangen 6 ist es möglich, diese aus einem nicht knickenden, stabilen Material wie etwa Metall herzustellen und/oder das Ausknicken dadurch zu verhindern, daß jede der über den Umfang verteilten Radialstangen 6 in einer separaten Radialführung 13 geführt wird. Die Radialführungen 13 sind in einem Käfig 10 eingearbeitet, der - wie in dem Längsschnitt der Fig. 4a ersichtlich - z. B. aus einzelnen Führungssegmenten 20 besteht, die sich zwischen jeweils zwei Radialstangen 6 befinden, und an einer der axialen Stirnseiten miteinander verbunden sind. Dies kann beispielsweise die Abtriebshülse 9' der Fig. 4a sein, wenn sichergestellt ist, daß die Radialstangen 6 zwar radial gegenüber der Abwälzhülse 1 beweglich, jedoch drehfest mit dieser verbunden sind. Dies ist erzielbar, indem die Radialstangen 6 mit ihren radial äußeren Enden zwischen in Umfangsrichtung anliegenden Anschlägen 27a, 27b in Umfangsrichtung gegenüber der Abwälzhülse 1 festgehalten werden, wie dies an einer Stelle der Fig. 4 ersichtlich ist.

Dadurch ist es möglich, bei der Abtriebshülse 9' der Fig. 4a auf die umlaufende Innenverzahnung 15' zu verzichten, die in Fig. 3 bzw. 3a noch für den Abtrieb notwendig war.

Die Führungssegmente 20 weisen dabei eine solche, sich nach außen zunehmende Breite auf, daß die dazwischen verbleibende Radialführung 13 die Radialstangen 6 möglichst spielfrei führt.

Dadurch, daß der Käfig 10 bzw. die Führungssegmente 20 einen Außendurchmesser besitzen, der kleiner ist als der kleinste Innendurchmesser der Abwälzbuchse 1, und einen Innendurchmesser, welcher größer ist als der größte Durchmesser des Antriebszapfens 7, ist der Käfig 10 kreisringförmig ausgebildet und muß nicht verformbar sein. Damit ist es möglich, die Führungssegmente 20 in einem festen gegenseitigen Abstand anzuordnen, so daß also Radialführungen 13 mit parallelen Flanken entstehen, in denen die mit ebenfalls parallelen Flanken ausgestatteten radial beweglichen Radialstangen 6 möglichst spielfrei darin geführt sind. Um den durch die elliptische Verformung der Abwälzhülse 1 auftretenden Winkelversatz auszugleichen, müssen die Radialstangen 6 entweder in Querrichtung begrenzt elastisch sein und/oder der Außenumfang der Führungssegmente 20 deutlich kleiner sein als der Innenumfang der Abwälzhülse 1 und/oder die Anschläge 27a, 27b das Ende der Radialstange 6 mit einem gewissen Spiel zwischen sich aufnehmen.

Die Frontansicht einer anderen Version gemäß Fig. 6 zeigt, daß die Verformung der Abwälzhülse 1 anstelle durch eine Vielzahl von über den Umfang verteilten Radialstangen 6 auch nur mittels eines einzigen Querarmes 17 realisierbar ist. Dieser erstreckt sich quer durch den Innendurchmesser der Abwälzhülse 1 und besitzt eine solche Länge, daß er die Abwälzhülse 1 an den zwei gegenüberliegenden Stellen in Eingriff mit der Innenverzahnung 15 der Stützhülse 2 hält. Der Querarm 17 wird dabei rotierend von dem nicht dargestellten Antrieb 11 um die Achsrichtung 5 angetrieben. Um Gleitreibung und damit Verschleiß zwischen den freien Enden des Querarmes 17 und dem Innenumfang 3' der Abwälzhülse 1 zu vermeiden, sind in den Endbereichen des Querarmes 17 zwei parallel zur Achsrichtung 5 drehbar gelagerte Anpreßrollen 18a, 18b gelagert, die auf dem Innenumfang 3' abrollen. Durch Variation des Durchmessers der Anpreßrollen 18a kann die Größe der Umfangsbereiche verändert werden, über welche die Innenverzahnung 15 mit der Außenverzahnung 16 in Eingriff steht.

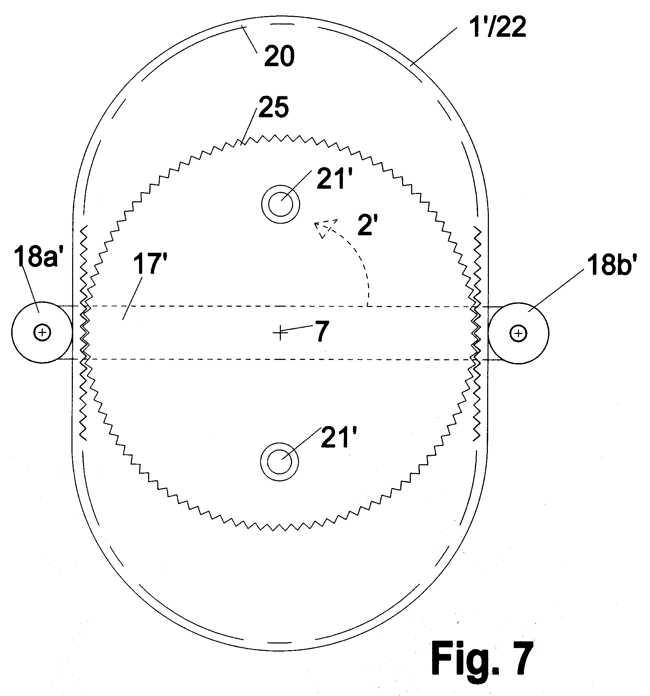

Die bisher beschriebenen Bauformen gingen von einer radial nicht verformbaren, außen angeordneten und mit einer Innenverzahnung versehenen Stützhülse 2 aus, welche damit gleichzeitig teilweise die Funktion eines Gehäuses erfüllt. Prinzipiell ist jedoch auch eine umgekehrte Anordnung möglich, wie in Fig. 7 dargestellt:

Dabei befindet sich im Zentrum die fest montierte Stützhülse 2', die mit einer Außenverzahnung 25 ausgestattet ist.

Auf dieser Stützhülse 2' wälzt sich mittels einer Innenverzahnung 26 eine außen um die Stützhülse 2' umlaufende, radial flexible, unrunde Abwälzhülse 1' ab. In dem Beispiel der Fig. 7 ist dabei in einem endlosen Zahnriemen 22 als Abwälzhülse 1' ausgegangen, welcher nur auf zwei diametral gegenüberliegenden Punkten von außen gegen die Stützhülse 2' gedrückt und mit dieser in Eingriff gehalten wird, weshalb sich für die Abwälzhülse 1' keine elliptische, sondern eine unregelmäßig längliche Form je nach Überlänge des Zahnriemens gegenüber dem Außenumfang der Stützhülse 2' ergibt. Die Anpressung von außen gegen die Stützhülse 2' erfolgt wiederum durch Anpreßrollen 18a', 18b', welche auf den Enden eines rotierenden Querarmes 17' aufgebracht sind, und den Zahnriemen 22 radial nach innen während des Umlaufes des Querarmes 2 drücken.

Wenn dabei die Anpreßrollen 18a', 18b' radial nach innen gegenüber dem Querarm 17 federnd beaufschlagt sind, ist es nicht einmal notwendig, daß die Stützhülse 2' eine runde Außenkontur hat. In diesem Fall ist selbst eine unrunde Außenkontur tragbar, wie sie in bestimmten Anwendungsfällen von Vorteil sein kann. Gleiches gilt natürlich auch für die umgekehrte Lösung gemäß Fig. 6, so daß dort dann die äußere Stützhülse 2 eine unrunde Innenkontur mit Verzahnung 15 haben könnte, was durch die federnde Befestigung der Anpreßrollen 18a, 18b ausgeglichen wird.

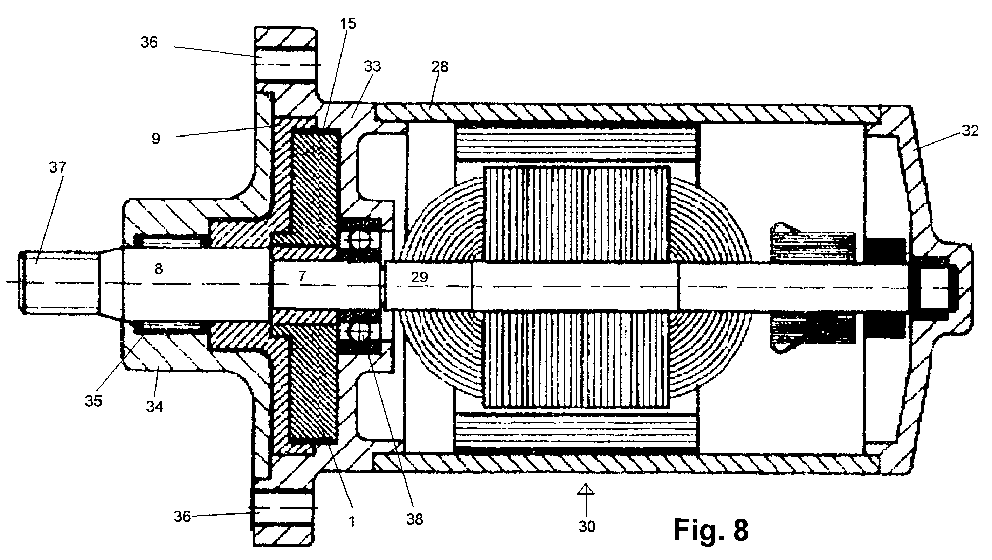

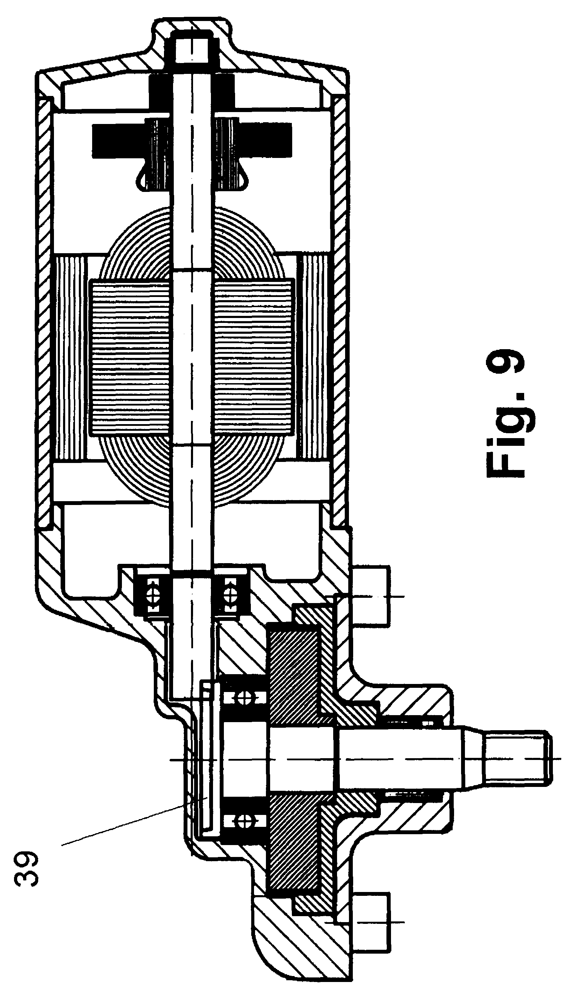

Die Figuren 8 und 9 zeigen im Längsschnitt einen elektrischen Antrieb, bei dem eines der vorbeschriebenen Differenzgetriebe mit einem Elektromotor 30 bzw. dessen Motorwelle 29 gekoppelt ist.

Dabei ist das Differenzgetriebe so in das Gehäuse des Motors 30 mit integriert, daß nur wenige zusätzliche Bauteile erforderlich sind, und sich die axiale Erstreckung des elektrischen Antriebes gegenüber dem elektrischen Motor 30 alleine nur geringfügig vergrößert. Wie in der Darstellung gemäß Fig. 8 zu erkennen, besteht das Gehäuse aus einem zylindrischen Teil 28, welcher durch einen heckseitigen Stirndeckel 32 verschlossen ist. In dem dadurch entstehenden topfförmigen Gehäuse befindet sich der eigentliche Elektromotor 30. Die gegenüberliegende Stirnseite wird durch einen Zwischendeckel 33 verschlossen, welcher stirnseitig auf dem zylindrischen Teil 28 des Gehäuses auf- bzw. eingesetzt ist.

Dieser Zwischendeckel 33 erfüllt einerseits die Gehäusefunktion, indem in diesem Zwischendeckel 33 mittels eines Lagers 38 das eine ende der Motorwelle 29 gelagert ist, welches jedoch über das Lager 38 auf die vom Motor 30 abgewandte Seite hinaus vorsteht und als Antriebszapfen 7 für das Getriebe dient, indem darauf nochmals drehfest eine Hülse mit zylindrischer Außenkontur aufgesetzt wird. Diese trägt die Abwälzhülse 1, die in der Regel aus Kunststoff besteht. Der Zwischendeckel 33 weist ferner axial gegenüber dem Lager 38 beabstandet und im Axialbereich des Antriebszapfens 7 die Innenverzahnung 15 auf, und wirkt dadurch gleichzeitig als Abstützhülse 2. Ferner erstreckt sich dieser Zwischendeckel 33 radial weiter nach außen und trägt in den radial außenliegenden Bereichen Durchlässe 36 zum Anflanschen des kompletten Antriebes an einem anderen Bauteil.

Auf dem vom Motor abgewandten Seite wird koaxial in den Zwischendeckel 33 die drehfest mit der Abtriebswelle 8 verbundene, meist ebenfalls aus Kunststoff bestehende Abtriebshülse 9 eingeschoben, die in axialer Richtung teilweise über den Außenumfang der Abwälzhülse 1 greift und mit dieser ebenfalls im Eingriff ist, sich jedoch im Zwischendeckel 33 frei drehen kann.

Zu diesem Zweck ist über die Abtriebswelle 8 und die Abtriebshülse 9 ein Frontdeckel 34 aufgesetzt und mit dem Zwischendeckel 33 fest verschraubt, welcher das Getriebe einerseits abdichtet und andererseits auf der vom Motor abgewandten Seite eine Abtriebshülse 9 an seinem Innenumfang ein Lager, beispielsweise ein Nadellager 35 mit ausreichend großer axialer Erstreckung trägt, um in diesem einzigen Lager die Abtriebswelle 8 der Antriebseinheit ausreichend zu lagern.

Das aus dem Frontdeckel 34 vorstehende Ende der Abtriebswelle 8 ist in an sich bekannter Weise beispielsweise mit einem Vielzahnprofil und anschließendem Kegelsitz zur Verbindung mit einem anzutreibenden Bauteil ausgestattet. Eine andere Möglichkeit besteht darin, daß Ende der Abtriebswelle 8 als Hohlwelle mit z. B. einem Innenvierkant auszustatten. In beiden Fällen ist es möglich, durch Aufsetzen entsprechender Adapterteile dieses Ende der Abtriebswelle 8 mit einem beinahe beliebig gestalteten Wellenende eines anzutreibenden Bauteiles zu koppeln.

Die Lösung gemäß Fig. 8 bietet damit eine komplette elektrische Antriebseinheit, welche trotz Einsatz ei8nes herkömmlichen Wechselstrommotors eine geringe Drehzahl mit hohem Drehmoment der Abtriebswelle 8 zur Verfügung stellt, wobei die Achsrichtung der Abtriebswelle 8 identisch mit der Achsrichtung der Motorwelle 29 ist und die gesamte Antriebseinheit keinen größeren Durchmesser besitzt als der Elektromotor alleine, sondern dessen Länge nur um wenige cm vergrößert.

Demgegenüber zeigt Fig. 9 eine Lösung in Anwendungsfällen, bei denen eine winklige Lage der Abtriebswelle 8 gegenüber der Haupterstreckungsrichtung der Antriebseinheit gewünscht ist. Dabei erstreckt sich der Zwischendeckel 34 um die 90°-Kröpfung herum, so daß der Frontdeckel 34 quer zur Richtung der Motorwelle 29 aufgesetzt wird. Zusätzlich unterscheidet sich die Bauform gemäß Fig. 9 gegenüber der von Fig. 8 dadurch, daß zwischen dem getriebeseitigen Ende der Motorwelle 29 und dem Antriebszapfen 7 des Getriebes eine Teller/Tellerradverzahnung angeordnet ist.

Zu diesem Zweck ist das freie Ende der Motorwelle 29, welche in den Zwischendeckel 33 hineinragt, mit einer Umfangsverzahnung ausgestattet, die in eine entsprechende stirnseitige Verzahnung eines Tellerrades 39 eingreift.

Das Tellerrad 39 ist auf dem hinteren Ende des Antriebszapfens 7 aufgesetzt, wobei sich zwischen dem Tellerrad 39 und dem Antriebszapfen 7 noch ein zusätzliches Lager 38' zur exakten Führung des Antriebszapfens 7 im Zwischendeckel 34 befindet. Alle übrigen Bauteile sind mit der Lösung gemäß Fig. 8 identisch, und können daher auch in beide Gehäuseformen eingesetzt und verwendet werden.

### BEZUGSZEICHENLISTE

- 1: Abwälzhülse
- 2: Stützhülse
- 3: äußerer Umfang
- 3': innerer Umfang
- 4: Gegenumfang
- 5: Achsrichtung
- 6: Radialstangen
- 7: Antriebszapfen
- 8: Abtriebswelle
- 9: Abtriebshülse
- 10: Käfig
- 11: Antrieb
- 12: Innenhülse
- 13: Radialführungen
- 14a, 14b: Flanken
- 15, 15': Innenverzahnung
- 16: Außenverzahnung
- 17: Querarm
- 18a, 18b: Anpreßrolle
- 19: Zusatzverzahnung
- 20: Führungssegmente
- 21: Verschraubung
- 22: Zahnriemen
- 23a, 23b: Deckel
- 24: Verzahnung
- 25: Außenverzahnung
- 26: Innenverzahnung
- 27a, 27b: Anschlag
- 28: zylindrisches Teil
- 29: Motorwelle
- 30: elektrischer Motor
- 31: Speichenrad
- 32: Stirndeckel
- 33: Zwischendeckel
- 34: Frontdeckel
- 35: Nadellager
- 36: Durchlaß
- 37: Vielzahnprofil
- 38: Lager
- 39: Tellerrad

## Patentansprüche

1. Torantrieb mit einer elektrischen Antriebseinheit, die ein stark untersetzendes Getriebe umfaßt,
**dadurch gekennzeichnet, daß**
- das Getriebe ein Differenzgetriebe umfaßt,
- bei welchem sich eine Abwälzhülse (1) mit ihrem Umfang (3) mit mindestens einem Umfangsabschnitt am Gegenumfang (4) einer konzentrisch angeordneten Stützhülse (2) abwälzt,
- Umfang (3) und Gegenumfang (4) unterschiedlich lang sind,
- der Umfang (3) der Abwälzhülse (1) eine unrunde, insbesondere elliptische, Form einnehmen kann und in radialer Richtung so flexibel ist, daß die Winkellage der unrunden Kontur gleichmäßig mit Hilfe eines Antriebes (11) um die Achsrichtung (5) herumwandern kann, ohne das flexible Bauteil (1) bzw. (2) selbst rotieren zu lassen, und
- das unrunde Teil (1) oder (2) mit einer Abtriebsachse (8) in Wirkverbindung steht.

2. Torantrieb nach Anspruch 1,
**dadurch gekennzeichnet, daß**
das Abwälzen am Umfang definiert formschlüssig, insbesondere mittels einer Umfangsverzahnung, oder indefiniert formschlüssig mittels einer Vielzahl kleiner, unregelmäßiger Erhebungen auf wenigstens einer der Umfangsflächen, schlupffrei geschieht.

3. Torantrieb nach einem der vorhergehenden Ansprüche,
**dadurch gekennzeichnet, daß**
die Abwälzhülse (1) einen unrunden, insbesondere elliptischen äußeren Umfang (3) aufweist und am inneren, kreisringförmigen Gegenumfang (4) einer feststehenden Stützhülse (2) abwälzt, indem sich im Zentrum der Abwälzhülse (1) ein entsprechend dem äußeren Umfang (3) unrunder, insbesondere elliptischer, Antriebszapfen (7) dreht, wobei die Änderung der Winkellage dessen unrunder Kontur mechanisch analog an die Abwälzhülse (1) weitergegeben wird.

4. Torantrieb nach Anspruch 3,
**dadurch gekennzeichnet, daß**
die mechanische Übertragung vom Antriebszapfen (7) auf die Abwälzhülse (1) mit Hilfe von radial beweglichen, im wesentlichen jedoch nicht mit dem Antriebszapfen (7) mitdrehenden, Radialstangen (6) erfolgt, die sich mit ihrem inneren Ende auf der Außenkontur des Antriebszapfens (7) und mit ihrem äußeren Ende an der unrunden, konzentrisch zum äußeren Umfang (3) verlaufenden inneren Umfang (3') der Abwälzhülse (1) abstützen.

5. Torantrieb nach einem der vorhergehenden Ansprüche,
**dadurch gekennzeichnet, daß**
die Radialstangen (6) mit der Abwälzhülse (1) und/oder seiner die inneren Enden der Radialstangen (6) verbindenden Innenhülse (12), welche den Antriebszapfen (7) eng umgibt und in Radialrichtung flexibel ist, um dessen Relativdrehung zu ermöglichen, einstückig, insbesondere aus Kunststoff, ausgebildet sind.

6. Torantrieb nach Anspruch 4,
**dadurch gekennzeichnet, daß**
die Radialstangen (6) unabhängig voneinander in Radialführungen (13) eines Käfigs (10) angeordnet sind und parallele Flanken (14) aufweisen.

7. Torantrieb nach einem der vorhergehenden Ansprüche,
**dadurch gekennzeichnet, daß**
der Käfig (10) zwischen die Radialstangen (6) axial hineinragende Führungssegmente (20) umfaßt, die sich von innen nach außen betrachtet in Achsrichtung (5), radial erweitern und die Radialstangen zumindest im Bereich der großen Querachse der Abwälzhülse (1) mit geringem Spiel in Umfangsrichtung zwischen sich führen.

8. Torantrieb nach einem der vorhergehenden Ansprüche,
**dadurch gekennzeichnet, daß**
der Käfig (10) drehfest mit der stillstehenden Stützhülse (2) verbunden, insbesondere einstückig ausgebildet, ist.

9. Torantrieb nach Anspruch 6,
**dadurch gekennzeichnet, daß**
der Käfig (10) mit der Abtriebsachse (8) drehfest verbunden ist und die einzige Wirkverbindung zwischen der Abwälzhülse (1) und der Abtriebswelle (8) darstellt.

10. Torantrieb nach einem der vorhergehenden Ansprüche,
**dadurch gekennzeichnet, daß**
wobei die Abwälzhülse (1) an der Stützhülse (2) mittels miteinander kämmender Innenverzahnung (15) bzw. Außenverzahnung (16) auf den jeweiligen Umfängen (3) bzw. (4) abwälzt,
**dadurch gekennzeichnet, daß**
- axial zur stillstehenden Stützhülse (2) eine ebenfalls innenverzahnte, drehbare Abtriebshülse (9) angeordnet ist,
- die Abwälzhülse (1) axial die Fuge zwischen Stützhülse (2) und Abtriebshülse (9) überdeckt und mit beiden gleichzeitig im Eingriff steht,
- Stützhülse (2) und Abtriebshülse (9) unterschiedliche Zähnezahl aufweisen, wobei insbesondere die Zähnezahl der Innenverzahnung (15') der Zähnezahl der Abwälzhülse (1) entspricht, und
- die Abtriebshülse (9) drehfest mit der Abtriebswelle (8) verbunden ist.

11. Torantrieb nach einem der vorhergehenden Ansprüche,
**dadurch gekennzeichnet, daß**
als Abwälzhülse (1) ein ringförmig geschlossener, flexibler endloser Zahnriemen verwendet wird.

12. Torantrieb nach einem der Ansprüche 1 bis 3,
**dadurch gekennzeichnet, daß**
die mechanische Übertragung der Winkellage vom Antriebszapfen (7) auf die Abwälzhülse (1) durch einen vom Antriebszapfen (7) rotierend angetriebenen Querarm (17) erfolgt, dessen Länge den Innendurchmesser der Abwälzhülse (1) entspricht, wenn diese in der feststehenden Stützhülse (2) vollständig im Eingriff ist, und deren freie Enden den Innenumfang der Abwälzhülse (1) radial nach außen drückt.

13. Torantrieb nach Anspruch 12,
**dadurch gekennzeichnet, daß**
an den freien Enden des Querarmes (17) jeweils eine Anpreßrolle (18) angeordnet ist, die den Innenumfang der Abwälzhülse (1) nach außen in die Stützhülse (2) hineindrückt.

14. Torantrieb nach einem der vorhergehenden Ansprüche,
**dadurch gekennzeichnet, daß**
der Außenumfang der Anpreßrollen (18a, 18b) und der Innenumfang der Abwälzhülse (1) mit einer Zusatzverzahnung (19) ausgestattet sind.
